# EUROPÄISCHE PATENTSCHRIFT

(11) **EP 2 054 153 B1**
(45) Veröffentlichungstag und Bekanntmachung des Hinweises auf die Patenterteilung: **22.01.2014**
(21) Anmeldenummer: 07788470.8
(22) Anmeldetag: 17.08.2007
(51) Int. Cl.: B01J 23/42

(54) **KATALYTISCH BESCHICHTETER DIESELPARTIKELFILTER, VERFAHREN ZU SEINER HERSTELLUNG UND SEINE VERWENDUNG**
CATALYTICALLY COATED DIESEL PARTICLE FILTER, PROCESS FOR PRODUCING IT AND ITS USE
FILTRE À PARTICULES DIESEL SUPPORTANT UN CATALYSEUR, PROCÉDÉ POUR SA FABRICATION ET UTILISATION DU FILTRE

(30) Priorität: 19.08.2006 DE 102006039028
(43) Veröffentlichungstag der Anmeldung: 06.05.2009
(73) Patentinhaber: Umicore AG & Co. KG, 63457 Hanau-Wolfgang (DE)
(72) Erfinder: KOEGEL, Markus, 67354 Römerberg (DE); PFEIFER, Marcus, 42719 Solingen (DE); JESKE, Gerald, 63543 Neuberg (DE); SCHUETZE, Frank-Walter, 63808 Haibach (DE); FRANTZ, Stéphanie, 63457 Hanau (DE); KREUZER, Thomas, 65191 Wiesbaden (DE)
(74) Vertreter: Herrmann, Reinhard
(86) Internationale Anmeldenummer: PCT/EP2007/058550
(87) Internationale Veröffentlichungsnummer: WO 2008/022967

(56) Entgegenhaltungen:
- EP-A- 1 721 665
- WO-A-2006/021336
- WO-A-2006/021338
- WO-A-2006/031600
- WO-A-2007/058867
- WO-A-2007/093325
- DE-A1-102004 020 259
- DE-A1-102004 048 247
- DE-A1-102005 062 317

## Beschreibung

Die Erfindung betrifft ein katalytisch beschichtetes Dieselpartikelfilter zur Reinigung der Abgase von Dieselmotoren, ein Verfahren zur Beschichtung des Filters und seine Verwendung.

Partikelfilter sind in der Lage, partikelförmige Abgasbestandteile, besonders Rußpartikel, aus dem Abgas von Verbrennungsmotoren herauszufiltern und so deren Ausstoß in die Atmosphäre zu verhindern. Prinzipiell können dazu sowohl Oberflächen- als auch Tiefenfilter eingesetzt werden. Oberflächenfilter bestehen üblicherweise aus keramischen Werkstoffen wie z.B. Siliziumkarbid, Corderit, Aluminiumtitanat oder Mullit. Mit diesen Filtern werden Filtrationsgrade von mehr als 95 % erreicht. Alternativ zu den Oberflächenfiltern können auch offene Strukturen zur Abscheidung von Rußpartikeln eingesetzt werden. Bei diesen offenen Strukturen handelt es sich in erster Linie um keramische Schäume oder um Filter aus metallischen Drahtgeflechten. Die Filtrationseffizienz dieser offenen Filtersysteme ist deutlich geringer als die typischer Oberflächenfilter (< 70%).

Die eigentliche Herausforderung beim Betreiben eines Partikelfilters im Abgas eines Verbrennungsmotors ist jedoch nicht die Filtration der Rußpartikel, sondern die periodische Regeneration der eingesetzten Filter. Da die zum Zünden und Verbrennen des Rußes mit Sauerstoff erforderlichen Temperaturen von mehr als 550 °C in modernen PKW Dieselmotoren üblicherweise nur im Vollastbetrieb erreicht werden können, sind zusätzliche Maßnahmen zur Oxidation der gefilterten Rußpartikel zwingend erforderlich, um ein Verblocken des Filters zu verhindern. Im allgemeinem unterscheidet man hier zwischen passiven und aktiven Heizmaßnahmen. Bei den aktiven Maßnahmen wird zur Anhebung der Temperatur des Partikelfilters beispielsweise eine elektrische Heizung (z.B. Glühstifte oder auch Mikrowellenheizungen) oder ein mit Kraftstoff betriebener Brenner eingesetzt. Solche aktiven Maßnahmen gehen stets mit einem erhöhten Kraftstoffbedarf einher. Aus diesem Grund wird in vielen am Markt erhältlichen Systemen der Einsatz von passiven Maßnahmen bevorzugt. Bei den passiven Systemen wird durch den Einsatz von Katalysatoren die zur Verbrennung der Rußpartikel benötigte Zündtemperatur herabgesetzt. Dies kann durch zwei unterschiedliche Konzepte erreicht werden. Ein Konzept ist der Einsatz von metallorganischen Kraftstoffadditiven, wie z.B. Cer- und Eisenverbindungen, die mit dem Kraftstoff verbrannt werden und sich als homogener Katalysator fein verteilt in Form von Metallclustern in der Rußschicht einlagern. Eine Alternative zu den additivbasierten Systemen ist die Beschichtung der Partikelfilter mit einem katalytisch aktiven Material.

Da die Absenkung der Rußzündtemperatur durch katalytische Maßnahmen im allgemeinen nicht ausreicht, um eine vollständige Regeneration des Filters in allen Betriebszuständen des Motors zu gewährleisten wird in der heutigen Praxis üblicherweise auf eine Kombination von passiven und aktiven Maßnahmen zurückgegriffen. Besonders bewährt hat sich die Kombination des Partikelfilters mit einem stromaufwärts angeordneten Oxidationskatalysator. Durch eine Nacheinspritzung von zusätzlichem Kraftstoff in Kombination mit anderen motorischen Maßnahmen (wie z.B. Androsselung) gelangen unverbrannter Kraftstoff und Kohlenmonoxid auf den Dieseloxidationskatalysator und werden dort katalytisch zu Kohlendioxid und Wasser umgesetzt. Durch die dabei freiwerdende Reaktionswärme wird das Abgas und damit auch das nachgeschaltete Partikelfilter aufgeheizt. In Kombination mit einer Absenkung der Rußzündtemperatur durch eine katalytische Beschichtung des Filters oder auch durch den Einsatz von Kraftstoffadditiven kann die erforderliche Nacheinspritzmenge reduziert und das Filter nahezu an jedem Betriebspunkt im Kennfeld des Motors regeneriert werden.

Bei der ersten Generation von Abgasnachbehandlungssystemen mit katalytisch beschichteten Partikelfiltern wurden die Filter zumeist nach einem oder zwei vorgeschalteten Oxidationskatalysatoren im Unterboden des Kraftfahrzeuges angeordnet. Bei neuen Abgasnachbehandlungssystemen werden die Filter dagegen möglichst nah hinter dem Motor eingebaut. Wegen des beschränkten Bauraumes und zur Verminderung der Kosten wird der Oxidationskatalysator in diesen Fällen teilweise oder komplett auf dem Filter aufgebracht. Ein solches motornah angeordnete Filter muß zur Einhaltung der gesetzlich vorgegebenen Grenzwerte für Kohlenmonoxid (CO) und Kohlenwasserstoffe (HC) über die geforderte Laufleistung ein entsprechend hohes Oxidationspotential verfügen. Daneben muß es zusätzlich über die gesamte Laufzeit in der Lage sein, die während einer aktiven Filterregeneration nacheingespritzten Kohlenwasserstoffe umzusetzen, um so die zur Erreichung der Rußzündtemperatur erforderliche Exothermie zu erzeugen. Darüber hinaus muß die katalytisch aktive Beschichtung für den motornahen Einsatz eines solchen Filters eine hohe thermische Stabilität aufweisen.

Bis heute werden für Diesel-PKW nahezu ausschließlich Filterbeschichtungen mit Platin eingesetzt. Beschichtungen mit Platin und Palladium sind ebenfalls bekanntgeworden (DE 102004040549 A1). Beschichtungen mit Platin und Palladium zeichnen sich durch eine sehr gute Temperaturstabilität aus, verfügen jedoch über eine geringere Frischaktivität als katalytische Beschichtungen mit Platin allein. Prinzipiell sind platin- und palladiumhaltige Beschichtungen bereits seit geraumer Zeit beschrieben. Auf Grund der deutlich geringeren Toleranz von Pt/Pd-Beschichtungen gegenüber einer Vergiftung durch Schwefel und der damit einhergehenden Abnahme der katalytischen Aktivität, wurde der Einsatz von Palladium in Abgaskatalysatoren für Diesel-PKW lange Zeit verhindert. Da es sich aber bei der Verschwefelung um eine bei hohen Temperaturen reversible Vergiftung handelt, werden bei periodisch aktiv regenerierenden Systemen, wie z.B. bei Dieselpartikelfiltern, die Edelmetallzentren der katalytischen Beschichtung während der Regenerationen gleichzeitig desulfatisiert. Damit wird die ursprüngliche Oxidationsaktivität wiederhergestellt.

Die WO 02/26379 A1 beschreibt unter anderem ein Rußfilter, welches zwei übereinanderliegende Katalysatorschichten enthält. Die erste Schicht befindet sich auf den Einlaßkanälen des Filters und enthält Komponenten zur Oxidation von Kohlenmonoxid und Kohlenwasserstoffen. Diese Komponenten bestehen aus Trägermaterialien mit darauf abgeschiedenen Platingruppenmetallen, wobei die Trägermaterialien ausgewählt sind aus der Gruppe bestehend aus Aluminiumoxid, Siliziumoxid, Titanoxid, Zirkonoxid und Zeolith und die Platingruppenmetalle ausgewählt sind aus Platin, Palladium und Rhodium. Die zweite Schicht ist auf der ersten Schicht aufgebracht und enthält Komponenten zur Herabsetzung der Zündtemperatur von Ruß, insbesondere wenigstens eine Sauerstoff speichernde Verbindung und wenigstens ein Platingruppenmetall.

Aufgabe der Erfindung ist die Bereitstellung eines katalytisch beschichteten Dieselpartikelfilters mit einem verbesserten Umsatz für Kohlenmonoxid und Kohlenwasserstoffe, welches darüber hinaus eine hohe Alterungsstabilität auch bei häufig wiederholten Regenerationen des Filters aufweist.

Diese Aufgabe wird durch ein katalytisch beschichtetes Partikelfilter gemäß Hauptanspruch gelöst. Bevorzugte Ausführungsformen des Filters sowie ein Verfahren zur Beschichtung des Filters und seine Verwendung werden in den Unteransprüchen angegeben.

Das Partikelfilter weist eine Eintrittsseite und eine Austrittsseite für die Abgase und eine axialen Länge auf. Das Filter ist auf seiner gesamten Länge mit einem ersten Katalysator beschichtet, der als katalytische aktive Komponenten Platingruppenmetalle auf Trägermaterialien enthält. Das Filter ist dadurch gekennzeichnet, daß die Trägermaterialien für die Platingruppenmetalle ausgewählt sind aus der Gruppe bestehend aus Aluminiumoxid, Siliziumdioxid, Titandioxid, Zirkonoxid, Ceroxid und Mischungen oder Mischoxiden davon und daß der erste Katalysator zusätzlich mindestens einen Zeolithen zur Speicherung von Kohlenwasserstoffen enthält. Weiterhin ist das Partikelfilter von der Eintrittsseite ausgehend auf 5 bis 80% der Länge mit einem zweiten Katalysator beschichtet ist, der keinen Zeolithen enthält, wobei der zweite Katalysator in einem zweiten Beschichtungsschritt aufgetragen wird und wobei die Katalysatoren im wesentlichen in den Pore des Partikelfilters eingelagert sind. Die für den ersten Katalysator verwendeten Zeolithe haben bevorzugt ein Modul (Molverhältnis SiO₂ zu Al₂O₃) von mehr als 10, um ausreichend stabil gegenüber den sauren Komponenten des Abgases und den maximalen Abgastemperaturen zu sein. Geeignete Zeolithe sind zum Beispiel Mordenit, Silicalit, Y-Zeolith, ZSM-5 Zeolith und BetaZeolith oder Mischungen davon, wobei die Zeolithe ein Molverhältnis von Siliziumdioxid zu Aluminiumoxid zwischen 10 und 400 aufweisen. Neben den Zeolithen können auch andere Materialien wie beispielsweise Aktivkohle eingesetzt werden.

Während Betriebsphasen des Motors mit niedriger Abgastemperatur unterhalb von ca. 200 °C speichern die Zeolithe die im Abgas enthaltenen Kohlenwasserstoffe. Dies ist wichtig, da bei diesen niedrigen Abgastemperaturen eine Oxidation der Kohlenwasserstoffe an den aktiven Edelmetallzentren des Katalysators nicht möglich ist. Solche Betriebsphasen treten bei modernen PKW-Dieselmotoren sowohl während eines Kaltstarts als auch während Leerlaufphasen sowie im Stadtverkehr auf. Bei Temperaturen oberhalb von etwa 200 °C überwiegt dagegen die Desorption der Kohlenwasserstoffe.

Bei diesen höheren Katalysatortemperaturen können jedoch die aus den Speicherkomponenten freigesetzten Kohlenwasserstoffe an den aktiven Zentren des Katalysators zu Kohlendioxid und Wasser umgesetzt werden.

Zur Erhöhung der katalytischen Aktivität können die Zeolithe zusätzlich mit Platingruppenmetallen (Platin, Palladium, Rhodium, Iridium) oder mit Übergangsmetallen (zum Beispiel Eisen, Kupfer, Cer) katalytisch aktiviert sein. Zur Aktivierung mit Platingruppenmetallen können die Zeolithe zum Beispiel mit wässrigen Lösungen von löslichen Vorläuferverbindungen imprägniert werden. Nach der Imprägnierung werden die Zeolithe getrocknet, kalziniert und gegebenenfalls reduziert. Die Beladung mit Platingruppenmetallen auf den Zeolithen beträgt bevorzugt zwischen 0,1 und 10 Gew.-%, bezogen auf das Gesamtgewicht von Zeolithen und Platingruppenmetallen.

Bei Verwendung von mit Übergangsmetallen ausgetauschten Zeolithen (Eisen, Kupfer und Cer) werden die Zeolithe in der Ammonium- oder Natrium-Form durch Ionenaustausch mit den Übergangsmetallen dotiert. Der Ionenaustausch kann dabei entweder in Lösung oder als sogenannter Festkörperionenaustausch durchgeführt werden. Die Beladung mit Übergangsmetallen beträgt bevorzugt ca. 1 bis 15 Gew.-% bezogen auf das Gesamtgewicht.

Der erste Katalysator enthält mindestens ein oder mehrere Platingruppenmetalle, bevorzugt eine Kombination von Platin und Palladium mit einem Gewichtsverhältnis von Platin zu Palladium von 1 : 10 bis 20 : 1, bevorzugt von 1 : 1 bis 10 : 1, insbesondere 2 : 1. Als Trägermaterialien für die Platingruppenmetalle eignen sich Aluminiumoxid, Siliziumdioxid, Titandioxid, Zirkonoxid, Ceroxid und Mischungen oder Mischoxide davon. Die Trägermaterialien können dabei durch Dotierung mit Seltenerdoxiden, Erdalkalioxiden oder Siliziumdioxid thermisch stabilisiert sein. So wird zum Beispiel bei Aluminiumoxid durch Dotierung mit Bariumoxid, Lanthanoxid oder Siliziumdioxid die Umwandlungstemperatur von γ- zu α-Aluminiumoxid von ca. 950 auf bis zu 1100 °C erhöht. Die Konzentration der Dotierungselemente berechnet als Oxid und bezogen auf das Gesamtgewicht des stabilisierten Aluminiumoxids beträgt dabei üblicherweise 1 bis 40 Gew.-%. Bei Verwendung von Ceroxid als Trägermaterial ist es vorteilhaft Cer/Zirkon-Mischoxide einzusetzen, da diese in der Regel eine höhere Temperaturstabilität besitzen als das reine Ceroxid. Die Stabilität der Cer/Zirkon-Mischoxide kann durch Dotierung mit Praseodymoxid oder Neodymoxid noch weiter verbessert werden. Darüber hinaus verfügen Cer/Zirkon-Mischoxide auch über vorteilhafte Sauerstoffspeichereigenschaften, sowohl was die maximale Saustoffspeicherkapazität als auch die Kinetik der Sauerstoffeinspeicherung und -freisetzung betrifft.

Das Partikelfilter ist von der Eintrittsseite ausgehend auf 5 bis 80 % seiner Länge mit dem zweiten Katalysator beschichtet. Dieser zweite Katalysator kann mit dem ersten Katalysator sowohl bezüglich der katalytisch aktiven Edelmetalle als auch bezüglich der verwendeten Trägermaterialien identisch oder auch verschieden sein. Die Länge des zweiten Katalysators kann 10 bis 50 % der Gesamtlänge des Filtersubstrates betragen.

Die Aufbringung des zweiten Katalysators von der Eintrittsseite des Filters führt zu einer gestuften Konzentration der katalytisch aktiven Komponenten. Im vorderen Teil des Filters befinden sich mehr katalytisch aktive Komponenten. Dies ist besonders bei motornah angeordneten Dieselpartikelfiltern mit integriertem Oxidationskatalysator vorteilhaft. Die häufig eingesetzten Siliziumkarbid-Filtersubstrate besitzen nämlich eine große thermischen Masse und weisen in den für die Zertifizierung vorgeschriebenen Testzyklen, wie z.B. dem NEDC (= New European Driving Cycle), einen starken axialen Temperaturgradienten auf. So werden insbesondere bei Verwendung längerer Dieselpartikelfilter (> 150 mm) die Temperaturen, die für die Umsetzung von Kohlenmonoxid und Kohlenwasserstoffen erforderlich sind, im stromabwärts angeordneten, hinteren Teil des Filters in der Regel über den gesamten Testzyklus nicht erreicht. Demzufolge würde bei einem gleichmäßig beschichteten Filter ein Teil des Edelmetalls nur wenig oder sogar überhaupt nicht zur Umsetzung von Kohlenmonoxid und Kohlenwasserstoffen beitragen. Aus diesem Grund ist es vorteilhaft, besonders bei motornah angeordneten Filtern die Edelmetalle gestuft über die Länge des Partikelfilters zu verteilen, so daß auf der Anströmseite eine Zone mit höherer Edelmetallbeladung und auf der Ausströmseite ein Bereich mit niedrigerer Edelmetallbeladung vorliegt. Allerdings ist zu vermeiden, daß auf der Filterauslaßseite eine minimale Edelmetall-Konzentration von ca. 0,1 g/l unterschritten wird, da ansonsten bei aktiven Filterregenerationen die Gefahr von sogenannten Sekundäremissionen, d.h. Durchbrüchen von Kohlenmonoxid und Kohlenwasserstoffen besteht.

Bei der Beschichtung von Dieselpartikelfiltern muß besonders auf eine möglichst geringe Erhöhung des Staudrucks durch die Beschichtung geachtet werden. Es hat sich gezeigt, daß der Anstieg des Staudrucks durch die Beschichtung gering gehalten werden kann, wenn die Katalysatormaterialien im wesentlichen in den porösen Wänden des Filtersubstrates abgeschieden werden. Zu diesem Zweck können verschiedene Verfahren genutzt werden:
■ Einbringung in Form fester Pulvermaterialien, die in wässriger Lösung suspendiert sind, wobei der mittlere Partikeldurchmesser der Pulvermaterialien wesentlich kleiner als der mittlere Porendurchmesser der Filtersubstrate sein muß;
■ Einbringung in Form von Solen;
■ Einbringung in Form von Lösungen von Vorstufen der späteren Trägermaterialien, die erst durch eine abschließende Kalzinierung in ihre endgültige Form überführt werden.

Die Einbringung der Katalysatormaterialien in Form fester Pulvermaterialien führt zu katalytischen Aktivitäten und Temperaturbeständigkeiten, die den anderen beiden Beschichtungsverfahren deutlich überlegen sind. Die Einbringung in Form von Lösungen von Vorstufen der späteren Trägermaterialien besitzt dagegen deutliche Vorteile in Bezug auf das Staudruckverhalten beschichteter Partikelfilter und ist deshalb insbesondere bei Verwendung kritischer Substrate (niedrige Porosität, kleiner mittlerer Porendurchmesser) ein geeignetes Beschichtungsverfahren.

Im Fall der Verwendung fester Pulvermaterialien werden diese zum Beispiel in Wasser suspendiert und zwecks Homogenisierung und Einstellung einer definierten Partikelgrößenvcrteilung vermahlen. Die Mahlung wird dabei so ausgerührt, daß die maximale Partikelgröße in der Suspension kleiner als 10 µm ist. Dies ist in der Regel dann der Fall, wenn der d₅₀-Durchmesser kleiner als 2 µm ist. Nur diese geringe Partikelgröße erlaubt es, den Katalysator nahezu ausschließlich in den Poren des Substrates abzuscheiden. Die in der Suspension verwendeten Trägermaterialien sind üblicherweise bereits vor dem Einbringen in die Suspension mit Platingruppenelementen aktiviert. Es besteht jedoch auch die Möglichkeit, gelöste Vorläuferverbindungen der katalytisch aktiven Platingruppenmetalle erst der Suspension der Trägermaterialien zuzufügen. Des weiteren kann auch nach Aufbringen der Trägermaterialien auf das Filtersubstrat eine nachträgliche Imprägnierung des Filters mit löslichen Vorstufen der Platingruppenmetalle erfolgen.

Es hat sich gezeigt, daß die Einstellung der Partikeldurchmesser durch Mahlung für Katalysatormaterialien und Zeolithe bevorzugt getrennt erfolgen soll. Katalysatormaterialien und Zeolithe weisen unterschiedliche Härten auf. Nur durch getrenntes Vermahlen kann für beide Materialien eine vergleichbare Partikelgrößenverteilung garantiert werden. Daher werden zur Beschichtung der Filter zunächst zwei getrennte Suspensionen angesetzt. Die erste Suspension enthält die Trägermaterialien, die mit Edelmetallen (zum Beispiel Platin, Palladium) aktiviert sind. Die zweite Suspension enthält die Zeolithe. Die Zeolithe werden bevorzugt in einem vorgelagerten Prozeßschritt durch Imprägnieren oder Ionenaustausch mit Edelmetall dotiert. Es kann aber auch Edelmetall mit Hilfe geeigneter Vorläuferverbindungen in die Zeolithsuspension gegeben werden. Bei beiden Suspensionen wird dann getrennt durch Mahlen ein mittlerer Partikeldurchmesser d₅₀ kleiner als 2 µm eingestellt; der d₉₀-Wert soll bei maximal 5-6 µm liegen. Direkt vor dem eigentlichen Beschichtungsprozeß werden beide Suspensionen gemischt und homogenisiert.

Es hat sich für motornah angeordnete Dieselpartikelfilter als vorteilhaft herausgestellt, wenn die Zeolithe über die gesamte Länge des Filters gleichmäßig verteilt sind. Erfindungsgemäß enthält nur der erste Katalysator Zeolithe. Der zweite Katalysator dient nur zur Erhöhung der Konzentration der katalytisch aktiven Edelmetalle im vorderen Teil des Partikelfilters. Bei einer derartigen Anordnung kann insbesondere unter transienten Bedingungen wie beispielsweise im NEDC, das bei Filtersubstraten aus Siliziumkarbid stark ausgeprägte axiale Temperaturprofil im Filter optimal ausgenutzt werden.

Die Verteilung der Zeolithe auf den ersten und zweiten Katalysator beeinflußt die Ausbildung des Abgasgegendrucks der beschichteten Filter. Werden die Zeolithe nur in den zweiten Katalysator eingebracht, so ist der Staudruck deutlich höher, als wenn die Zeolithe mit dem ersten Katalysator gleichmäßig über die gesamte Länge des Filters aufgebracht werden. Die Verwendung von Zeolithen im ersten und zweiten Katalysator hat dagegen bei gleicher Gesamtbeladung an Zeolithen im Vergleich zur ausschließlichen Anordnung der Zeolithe im ersten Katalysator keinen signifikanten Unterschied im Staudruckverhalten gezeigt.

Prinzipiell nimmt die Speicherkapazität für Kohlenwasserstoffe mit steigender Menge an Zeolithen zu. Die maximal einsetzbare Menge an Zeolithen hängt jedoch stark von der Porosität und dem mittleren Porendurchmesser des verwendeten Filtersubstrates ab. Übliche Zeolithbeladungen reichen von 5 g/l (Filtervolumen) bei niedrig porösen Substraten (< 50%) bis ca. 50 g/l bei Substraten mit höherer Porosität (> 50%). Das Verhältnis von Zeolithen zu den mit Platingruppenmetal dotierten Trägermaterialien beträgt in den erfindungsgemäßen Partikelfiltern vorzugsweise 0,1 bis 10.

Für die Dieselpartikelfilter sind die bekannten Filtersubstrate geeignet. Bevorzugt werden sogenannte Wandflußfilter aus Siliziumkarbid, Cordierit, Aluminiumtitanat oder Mullit eingesetzt. Um eine optimale Einlagerung der Katalysatormaterialien und der Zeolithe in die Poren der Filtersubstrate zu ermöglichen, sollte das Material der Filter eine offenporige Struktur mit einer Porosität zwischen 40 und 80 % und einem mittleren Porendurchmesser zwischen 9 und 30 µm besitzen.

Die Erfindung wird nun an Hand der folgenden Beispiele und Figuren näher erläutert. Es wurden mehrere Dieselpartikelfilter mit unterschiedlichen Beschichtungen hergestellt und am Motorprüfstand sowie in einem Testfahrzeug im Europäischen Testzyklus NEDC hinsichtlich ihrer Reinigungsleistung untersucht. Die Filter wurden im Frischzustand und nach hydrothermaler Alterung (Atmosphäre aus 10 % H₂O, 10 % O₂, Rest N₂; 16h bei 750 °C in einem Kammerofen) vermessen.

Bei den verwendeten Substraten handelte es sich jeweils um Filter aus Siliziumkarbid mit einer Zelldichte von 46,5 cm⁻¹ (300 cpsi) und einer Dicke der Kanalwände von 0,3 mm (12 mil). Die Porosität des verwendeten Filtermaterials betrug 60 %, der mittlere Porendurchmesser lag bei 20 µm. Die Filterkörper hatten eine Länge von 152,4 mm.

### Staudruckmessungen

Zur Beurteilung des Einflusses der Beladung von Partikelfiltern mit Zeolithen wurde der Staudruck von drei unterschiedlich mit Trägeroxiden und Zeolithen beladenen Partikelfiltern in einer Staudruckapparatur bei Durchflußmengen zwischen 150 und 300 m³/h vermessen.

Filter 1 wurde nicht beladen. Filter 2 erhielt eine Beschichtung mit einer Aluminiumoxidsuspension, die nach Trocknung und Kalzinierung eine Beladungskonzentration von etwa 30 g/l aufwies. Filter 3 wurde mit Aluminiumoxid und mit einer Zeolithmischung aus einem Y- und einem Beta-Zeolithen (Mischungsverhältnis 1:1) beschichtet. Aluminiumoxid und Zeolithe wurden erfindungsgemäß getrennt vermahlen bis die mittlere Partikelgröße von Aluminiumoxid und von den Zeolithen weniger als 2 µm betrug. Die Beladung von Filter 3 betrug 30 g/l Aluminiumoxid und 10 g/l der Zeolithmischung.

Die Messungen an der Staudruckapparatur zeigten, daß die Beschichtung von Filter 2 mit einer reinen Aluminiumoxidsuspension den Staudruck im Vergleich zum unbeschichteten Filter 1 um ca. 15 bis 20 % erhöht. Der Zusatz von nur 10 g/l Zeolith führte hingegen bei Filter 3 zu einem um ca. 50 % erhöhten Gegendruck im Vergleich zum unbeschichteten Substrat.

### Vergleichsbeispiel (Filter V):

Es wurde ein Filtersubstrat zunächst homogen über die gesamte Filterlänge mit einem auf einem stabilisierten γ-Aluminiumoxid geträgerten Pt/Pd-Katalysator beschichtet. Die Beschichtungssuspension wurde so lange vermahlen, bis ein mittlerer Partikeldurchmesser von weniger als 2 µm erreicht war. Hierdurch wurde das Katalysatormaterial bei der Beschichtung fast vollständig in den Poren des Filtersubstrats abgelagert. Das Pt/Pd-Verhältnis dieser ersten Katalysatorschicht betrug 2 : 1 und die Edelmetallbeladung 2,12 g/l (60 g/ft³). In einem zweiten Beschichtungsschritt wurde über die Hälfte der Filterlänge eine zweite Katalysatorschicht mit einem Edelmetallgehalt von ebenfalls 2,12 g/l (60 g/ft³) und identischem Pt/Pd-Verhältnis aufgebracht. Die daraus resultiercndc Gesamtedelmetallbeladung des Vergleichsfilters V betrug somit ca. 90 g/ft³, beziehungsweise 3,18 g/l. Auch die zweite Katalysatorschicht wurde überwiegende in den Poren des Filtersubstrates eingelagert.

### Beispiel 1 (Filter F1) (nicht erfindungsgemäß):

Ein zweites Filtersubstrat wurde mit dem erfindungsgemäßen Katalysator beschichtet. Dabei wurde das Filter zunächst gleichmäßig über die gesamte Filterlänge mit einer Edelmetallbeladung von 60 g/ft³ beschichtet. Im Unterschied zum Vergleichsbeispiel enthielt die erfindungsgemäße Beschichtung jedoch zusätzlich zu dem mit Pt/Pd im Verhältnis 2 : 1 belegten stabilisierten γ-Aluminumoxid auch eine Zeolithmischung aus einem Y- und einem Beta-Zeolithen (Mischungsverhältnis 1:1). Beide Zeolithe wurden vor der Zugabe in die Beschichtungssuspension mit geringen Mengen Pt (0,5 Gew.-%) mittels Imprägnierung dotiert. Das Verhältnis von γ-Aluminumoxid zu Zeolithmischung betrug ca. 1:1. Danach wurde in einem weiteren Beschichtungsschritt die Eintrittseite des Filters auf einer Länge von 76,2 mm unter Verwendung der identischen Beschichtungssuspension mit zusätzlichen 2,12 g/l Edelmetall beschichtet. Die Gesamtkonzentration der Edelmetalle Pt und Pd auf dem Filter F1 betrug somit 3,18 g/l (90 g/ft³) bei einem Pt/Pd-Verhältnis von 2 : 1.

Die Überprüfung der katalytischen Aktivität der beiden Filter im frischen Zustand und nach einer hydrothermalen Ofenalterung wurde an einem EURO IV zertifizierten PKW mit einem 103 kW 2,0 l Dieselmotor mit Pumpe-Düse-Einspritzsystem durchgeführt. Dabei wurden die Filter motornah angeordnet und ohne vorgeschalteten Dieseloxidationskatalysator im NEDC (New European Driving Cycle) Testzyklus vermessen. Die Ergebnisse einschließlich der Rohemissionen des Fahrzeugs sind in Tabelle 1 zusammengestellt.

Anhand der Emissionen im NEDC ist deutlich zu erkennen, daß durch die Verwendung der der Zeolithe als HC-Speicherkomponenten in Filter F1 die HC-Emission sowohl im Frischzustand als auch nach harter thermischer Alterung (16 Stunden, 790 °C) signifikant reduziert wurden. Bemerkenswert ist, daß Gleiches auch für die CO-Emissionen gilt. Nach Alterung wird eine Verringerung der CO-Emissionen um mehr als 30 % beobachtet.

### Beispiel 2 (Filter F2 und F3) (F3 nicht erfindungsgemäß)

Analog zu Beispiel 1 (Filter F1) wurden zwei weitere Filtersubstrate mit einer Edelmetallbeladung von 3,18 g/l beschichtet. Im Filter F2 wurde im Gegensatz zum Filter F1 die Zeolithmenge von 20 g/l ausschließlich in der ersten katalytischen Schicht über die gesamte Filterlänge aufgebracht. Bei Filter F3 wurden die Zeolithe ausschließlich mit der zweiten Katalysatorschicht aufgebracht. Bei den verwendeten Zeolithen handelte es sich wie bei Beispiel 1 um eine Mischung aus einem Y-Zeolithen und einem Beta-Zeolithen (Mischungsverhältnis 1:1). Die beiden eingesetzten Zeolithe waren mit jeweils 0,5 Gew.-% Pt dotiert.

Die katalytische Aktivität der Filter F2 und F3 wurde ebenfalls sowohl frisch als auch nach hydrothermaler Ofenalterung an einem EURO IV zertifizierten PKW mit einem 103 kW 2,0 l Dieselmotor mit Pumpe-Düse-Einspritzsystem durchgeführt. Die Ergebnisse sind ebenfalls in Tabelle 1 wiedergegeben.

Insbesondere nach hydrothermaler Alterung bei 790 °C zeigt sich auch für die Filter F2 und F3 ein verbessertes Emissionsverhalten sowohl in Bezug auf die im NEDC emittierten Kohlenwasserstoffe als auch auf die CO-Emissionen. Von Vorteil erweist sich die Verwendung der HC-Speicherkomponenten über der gesamten Filterlänge. Eine Aufteilung der Zeolithmenge auf ersten und zweiten Katalysator zeigt keinen Vorteil im Vergleich zum ausschließlichen Einsatz der Zeolithe im ersten Katalysator. Der ausschließliche Einsatz der Zeolithe im zweiten Katalysator ist weniger günstig im Hinblick auf die Emissionen von Kohlenwasserstoffen und Kohlenmonoxid im NEDC. Im Vergleich zu F1 erhöht sich die HC-Emission um ca. 60%, die CO-Emissionen steigen um ca. 18 % an. Trotzdem bewirkt auch der Einsatz der Zeolithe in der "hochbeladenen" Zone am Filtereinlaß eine signifikante Verringerung der Schadstoffemissionen im NEDC im Vergleich zum Filter V des Vergleichsbeispiels.

**Tabelle 1: Rohemissionen und Beutelemissionen von CO und HC im NEDC (Diesel-PKW 103 kW, 2,0 l Euro IV zertifiziert).**

| **Filter** | **Zustand** | **CO-Emission [g/km]** | **HC-Emission [g/km]** |
|---|---|---|---|
| Rohemission | - | 0,96 | 0,23 |
| V | frisch | 0,033 | 0,039 |
| V | gealtert | 0,230 | 0,056 |
| F1 | frisch | 0,027 | 0,012 |
| F1 | gealtert | 0,157 | 0,029 |
| F2 | frisch | 0,044 | 0,013 |
| F3 | frisch | 0,048 | 0,021 |
| F2 | gealtert | 0,143 | 0,028 |
| F3 | gealtert | 0,185 | 0,047 |

### Beispiel 3 (Filter F4, F5, F6, F7)(nichterfindungsgemäß):

In einem weiteren Versuchsprogramm wurden vier katalytisch beschichte Partikelfilter mit unterschiedlichen Zeolithmengen beschichtet. Die vier Filter F4 bis F7 wurden analog zu Filter F1 hergestellt. Dabei wurden die Filter zunächst gleichmäßig über die gesamte Filterlänge mit einer Edelmetallbeladung von 2,12 g/l (entspricht 60 g/ft³) beschichtet. In einem zweiten Beschichtungsschritt wurden die Filter mit einer Zone über eine Länge von 76,2 mm mit zusätzlichen 2,12 g/l Edelmetall beschichtet, so daß sich eine Gesamtedelmetallbeladung von 90 g/ft³ (Pt/Pd = 2 : 1) ergab. Während die Menge an Trägeroxiden (stabilisiertes γ-Aluminiumoxid) konstant gehalten wurde, wurden die vier Filter mit unterschiedlichen Zeolithmengen (von 10 bis 40 g/l) beschichtet, wobei sowohl für den ersten Katalysator als auch für den zweiten Katalysator die gleiche Zeolithmischung aus 50 % Y- und 50 % Beta-Zeolith wie bei Filter F1 verwendet wurde. Die Pt-Konzentration auf den Zeolithen betrug dabei 0,5 Gew.-%. Tabelle 2 zeigt die Zusammensetzungen der vier erfindungsgemäßen Filter F4 - F7.

Zur Überprüfung der HC-Speicherkapazität der erfindungsgemäßen Filter in Abhängigkeit vom Zeolithgehalt wurden Einspeichertests an einem 4 Zylinder Dieselmotor mit Common Rail Einspritzsystem (2,2 l, 100 kW) durchgeführt. Die Einspeichertests wurden an einem konstanten Motorbetriebspunkt mit einer Filtereingangstemperatur von ca. 110 °C durchgeführt. Die HC-Emissionen vor und nach Katalysator wurden mit Hilfe eines FID-Analysators (AMA 2000, Pierburg) aufgezeichnet. Die Einspeicherungsversuche wurden jeweils solange gefahren bis die HC-Konzentration nach Katalysator für die Dauer ca. 10 Minuten einen stationären Wert erreicht hatte. Die eingespeicherte HC-Menge wurde aus den HC-Konzentrationen vor und nach Katalysator ermittelt:

Anhand der in Tabelle 2 dargestellten Ergebnisse wird deutlich, daß die eingespeicherte HC-Menge durch die Verwendung von Zeolithen sprunghaft zunimmt. Bereits der Einsatz von 10 g/l Zeolith führt zu einer Erhöhung der in dem Speichertest eingespeicherten Menge an Kohlenwasserstoffen. Mit weiter zunehmendem Zeolithgehalt in den Einzelkatalysatoren nimmt die HC-Speicherkapazität kontinuierlich zu. Erst bei Zeolithgehalten oberhalb von 25 g/l scheint eine Art Sättigungsverhalten aufzutreten.

**Tabelle 2: Edelmetallgehalt und Zeolith-Beladung für die Filter F4 bis F7 sowie die eingespeicherte HC-Menge während des HC-Einspeichertests am Motorprüfstand.**

| Filter | EM-Gehalt | Zeolith-Beladung | Eingespeicherte HC-Masse |
|---|---|---|---|
| | [g/l] | [g/l] | [g] |
| V | 90 | ohne | **1,29** |
| F4 | 90 | 10 | 2,49 |
| F5 | 90 | 17 | 3,62 |
| F6 | 90 | 23 | 4,77 |
| F7 | 90 | 40 | 5,74 |

Die Speicherung von Kohlenwasserstoffen durch die HC-Speicherkomponenten vermindert die Adsorption von Kohlenwasserstoffspezies an den aktiven Oxidationszentren des Katalysators. Dadurch wird auch die Umsetzung von Kohlenmonoxid positiv beeinflußt.

Durch die Einlagerung der Zeolithe in die Poren der Filtersubstrate wird ihr negativer Einfluß auf den Staudruck des Filters weitgehend unterdrückt.

## Patentansprüche

1. Partikelfilter zur Behandlung der Abgase von Dieselmotoren mit einer Eintrittsseite und einer Austrittsseite für die Abgase und einer axialen Länge, welches mit einem ersten Katalysator auf seiner gesamten Länge beschichtet ist, der als katalytisch aktive Komponenten Platingruppenmetalle auf Trägermaterialien enthält,
**dadurch gekennzeichnet,**
**daß** die Trägermaterialien für die Platingruppenmetalle ausgewählt sind aus der Gruppe bestehend aus Aluminiumoxid, Siliziumdioxid, Titandioxid, Zirkonoxid, Ceroxid und Mischungen oder Mischoxiden davon und daß der erste Katalysator zusätzlich mindestens einen Zeolithen zur Speicherung von Kohlenwasserstoffen enthält und daß das Partikelfilter von der Eintrittsseite ausgehend auf 5 bis 80% der Länge mit einem zweiten Katalysator beschichtet ist, der keinen Zeolithen enthält, wobei der zweite Katalysator in einem zweiten Beschichtungsschritt aufgetragen wird und wobei die Katalysatoren im wesentlichen in den Poren des Partikelfilters eingelagert sind.

2. Partikelfilter nach Anspruch 1,
**dadurch gekennzeichnet,**
**daß** die Zeolithe ausgewählt sind aus der Gruppe bestehend aus Mordenit, Silicalit, Y-Zeolith, ZSM-5 Zeolith und beta-Zeolith oder Mischungen davon, wobei die Zeolithe ein Molverhältnis von Siliziumdioxid zu Aluminiumoxid zwischen 10 und 400 aufweisen.

3. Partikelfilter nach Anspruch 2,
**dadurch gekennzeichnet,**
**daß** die Zeolithe mit Übergangsmetallionen ausgetauscht sind.

4. Partikelfilter nach Anspruch 3,
**dadurch gekennzeichnet,**
**daß** als Übergangsmetalle Eisen, Kupfer oder Cer oder Mischungen davon vorliegen

5. Partikelfilter nach Anspruch 2,
**dadurch gekennzeichnet,**
**daß** die Zeolithe mit wenigstens einem Platingruppenmetall katalytisch aktiviert sind, wobei die Konzentration der Platingruppenmetalle auf den Zeolithen zwischen 0,1 und 10 Gew.-%, bezogen auf das Gesamtgewicht von Zeolithen und Platingruppenmetallen, beträgt.

6. Partikelfilter nach Anspruch 1,
**dadurch gekennzeichnet,**
**daß** beide Katalysatoren als Platingruppenmetalle Platin und Palladium im Gewichtsverhältnis zwischen 1 : 10 und 20 : 1 enthalten.

7. Partikelfilter nach Anspruch 1,
**dadurch gekennzeichnet,**
**daß** das Gewichtsverhältnis von Zeolithen zu den mit Platingruppenelementen dotierten Trägermaterialien im ersten Katalysator 0,1 bis 10 beträgt.

8. Partikelfilter nach Anspruch 1,
**dadurch gekennzeichnet,**
**daß** es sich bei dem Partikelfilter um ein Wandflußfilter aus keramischem Material handelt, dessen Wände eine offenporige Struktur mit einer Porosität zwischen 40 und 80 % und einem mittleren Porendurchmesser zwischen 9 und 30 µm aufweist.

9. Verfahren zur Herstellung eines Partikelfilters nach einem der vorstehenden Ansprüche,
**dadurch gekennzeichnet,**
**daß** die beiden Katalysatoren in Form von Suspensionsbeschichtungen auf das Partikelfilter aufgebracht werden.

10. Verfahren nach Anspruch 9,
**dadurch gekennzeichnet,**
**daß** für die Beschichtung eines jeden Einzelkatalysators zunächst jeweils 2 Suspensionen hergestellt werden, wobei eine Suspension die mit den Platingruppenmetallen aktivierten Trägermaterialien und die zweite Suspension die Zeolithe enthält und beide Suspensionen auf einen mittleren Partikeldurchmesser von weniger als 2 µm vermahlen und kurz vor der Beschichtung des Filters miteinander gemischt und homogenisiert werden.

11. Verwendung des Partikelfilters nach einem der Ansprüche 1 bis 8 für die Verminderung von Kohlenmonoxid, Kohlenwasserstoffen und Rußpartikeln im Abgas von Dieselmotoren.

## Claims

1. Particulate filter for treating the exhaust gases of diesel engines comprising an entry side and an exit side for the exhaust gases and an axial length, said particulate filter being coated over its entire length with a first catalyst which comprises platinum group metals as catalytically active components on support materials,
**characterized in that**
the support materials for the platinum group metals are selected from the group consisting of aluminum oxide, silicon dioxide, titanium dioxide, zirconium oxide, cerium oxide and mixtures or mixed oxides thereof, and **in that** the first catalyst additionally comprises at least one zeolite for storage of hydrocarbons, and **in that** the particulate filter is coated with a second catalyst which does not comprise a zeolite over 5 to 80% of the length proceeding from the entry side, the second catalyst being applied in a second coating step and the catalysts being essentially intercalated in the pores of the particulate filter.

2. Particulate filter according to Claim 1,
**characterized in that**
the zeolites are selected from the group consisting of mordenite, silicalite, Y zeolite, ZSM-5 zeolite and beta zeolite or mixtures thereof, said zeolites having a molar ratio of silicon dioxide to aluminum oxide between 10 and 400.

3. Particulate filter according to Claim 2,
**characterized in that**
the zeolites have been exchanged with transition metal ions.

4. Particulate filter according to Claim 3,
**characterized in that**
the transition metals present are iron, copper or cerium or mixtures thereof.

5. Particulate filter according to Claim 2,
**characterized in that**
the zeolites have been catalytically activated with at least one platinum group metal, the concentration of the platinum group metals on the zeolites being between 0.1 and 10% by weight, based on the total weight of zeolites and platinum group metals.

6. Particulate filter according to Claim 1,
**characterized in that**
both catalysts comprise, as platinum group metals, platinum and palladium in a weight ratio between 1:10 and 20:1.

7. Particulate filter according to Claim 1,
**characterized in that**
the weight ratio of zeolites to the support materials doped with platinum group elements in the first catalyst is from 0.1 to 10.

8. Particulate filter according to Claim 1,
**characterized in that**
the particulate filter comprises a wall flow filter which is composed of ceramic material and whose walls have an open-pore structure with a porosity between 40 and 80% and a mean pore diameter between 9 and 30 µm.

9. Process for producing a particulate filter according to any one of the preceding claims,
**characterized in that**
the two catalysts are applied to the particulate filter in the form of suspension coatings.

10. Process according to Claim 9,
**characterized in that**
in each case two suspensions are first prepared for the coating of each and every individual catalyst, one suspension comprising the support materials activated with the platinum group metals and the second suspension comprising the zeolites, and both suspensions being ground to a mean particle diameter of less than 2 µm and being mixed and homogenized with one another shortly before the coating of the filter.

11. Use of the particulate filter according to any one of Claims 1 to 8 for the reduction of carbon monoxide, hydrocarbon and soot particle levels in the exhaust gas of diesel engines.

## Revendications

1. Filtre à particules pour le traitement des gaz d'échappement de moteurs diesel avec un côté d'entrée et un côté de sortie pour les gaz d'échappement et une longueur axiale, qui est revêtu sur toute sa longueur avec un catalyseur, qui contient comme composants à action catalytique des métaux du groupe du platine sur des matériaux de support,
**caractérisé en ce que**
les matériaux de support pour les métaux du groupe du platine sont sélectionnés dans le groupe composé de l'oxyde d'aluminium, du dioxyde de silicium, du dioxyde de titane, de l'oxyde de zirconium, de l'oxyde de cérium et de mélanges ou d'oxydes mixtes de ceux-ci, et **en ce que** le premier catalyseur contient en outre au moins une zéolithe pour l'accumulation d'hydrocarbures, et **en ce que** le filtre à particules est revêtu sur 5 à 80 % de sa longueur, à partir du côté d'entrée, avec un deuxième catalyseur, qui ne contient pas de zéolithe, dans lequel le deuxième catalyseur est déposé dans une deuxième couche de revêtement et dans lequel les catalyseurs sont déposés essentiellement dans les pores du filtre à particules.

2. Filtre à particules selon la revendication 1, **caractérisé en ce que** les zéolithes sont sélectionnées dans le groupe composé de la mordénite, la silicalite, la zéolithe Y, la zéolithe ZSM-5 et la zéolithe beta ou des mélanges de celles-ci, dans lequel les zéolithes présentent un rapport molaire de dioxyde de silicium à l'oxyde d'aluminium entre 10 et 400.

3. Filtre à particules selon la revendication 2, **caractérisé en ce que** les zéolithes sont échangées avec des ions de métaux de transition.

4. Filtre à particules selon la revendication 3, **caractérisé en ce qu'**il se trouve comme métaux de transition le fer, le cuivre ou le cérium ou des mélanges de ceux-ci.

5. Filtre à particules selon la revendication 2, **caractérisé en ce que** les zéolithes sont activées par voie catalytique avec au moins un métal du groupe du platine, dans lequel la concentration des métaux du groupe du platine sur les zéolithes vaut entre 0,1 et 10 % en poids, rapportés au poids total de zéolithes et de métaux du groupe du platine.

6. Filtre à particules selon la revendication 1, **caractérisé en ce que** les deux catalyseurs contiennent comme métaux du groupe du platine du platine et du palladium dans un rapport pondéral entre 1:10 et 20:1.

7. Filtre à particules selon la revendication 1, **caractérisé en ce que** le rapport pondéral de zéolithes aux matériaux de support dopés avec des éléments du groupe du platine dans le premier catalyseur vaut 0,1 à 10.

8. Filtre à particules selon la revendication 1, **caractérisé en ce que** le filtre à particules est un filtre à écoulement en paroi en matériau céramique, dont les parois présentent une structure à pores ouverts avec une porosité comprise entre 40 et 80 % et un diamètre moyen des pores compris entre 9 et 30 µm.

9. Procédé de fabrication d'un filtre à particules selon l'une quelconque des revendications précédentes, **caractérisé en ce que** l'on dépose les deux catalyseurs sous la forme de revêtements de suspension sur le filtre à particules.

10. Procédé selon la revendication 9, **caractérisé en ce que** l'on prépare, pour le revêtement de chaque catalyseur individuel, d'abord respectivement deux suspensions, dans lequel une suspension contient les matériaux de support activés avec les métaux du groupe du platine et la deuxième suspension contient les zéolithes, et on moud les deux suspensions à un diamètre moyen des particules inférieur à 2 µm et on les mélange ensemble et on les homogénéise peu avant le revêtement du filtre.

11. Utilisation du filtre à particules selon l'une quelconque des revendications 1 à 8 pour la diminution du monoxyde de carbone, des hydrocarbures et des particules de suie dans les gaz d'échappement de moteurs diesel.
